# EUROPEAN PATENT APPLICATION

(11) **EP 0 701 892 A2**
(43) Date of publication of application: **20.03.1996**
(21) Application number: 95305901.1
(22) Date of filing: 23.08.1995
(51) Int. Cl.: B29C 51/16, A42C 2/00

(54) **Method of making an article by lining a preformed foam article with a thermoplastic sheet and a helmet**

(30) Priority: 24.08.1994 GB 9417063
(71) Applicant: Tuscarora Limited, Lodge Farm Industrial Estate, Northampton NN5 7UB (GB)
(72) Inventor: Houghton, Glynn, Blakesley, Nr Towcester, Northants (GB); Abrahams, Brian, New Duston, Northampton, NN5 6RH (GB)
(74) Representative: Gilding, Martin John

(57) **Abstract**

A method of making an article 10 comprises mounting a foam plastics core 12 on a support 18 and forming a sheet material 22 around the core. Suitably the softening point of the sheet material 22 is at least 100°C greater than that of the material of the foam core 12 so that the core and sheet material 22 become firmly bonded together during forming of the sheet material. The material of the core 12 is chosen such that it is resistant to collapse when exposed for short periods of time to temperatures considerably in excess of its softening point. A helmet 10 formed by the method preferably has an impact resistant shell 14 (provided by the sheet material 22) intimately conformed with and bonded to the core 12.

## Description

This invention is concerned with a method of making an article comprising a core of foam plastics material having a surface covered with a plastics sheet material.

Among such articles are protective head-gear, namely helmets, for example, cycle helmets, firemans helmets, horse riding helmets and other types of helmet. Other articles which may have such a construction include pallets on which products may be stacked and articles where inbuilt insulation, rigidity and impact resistance is important.

Previously, protective helmets, for example riding helmets, have been manufactured by first moulding a core of a suitable foam plastics material, for example polystyrene using a first, relatively expensive mould. A shell of a suitable impact resistant and rigid plastics material is then moulded separately, using a second relatively expensive mould, from a suitable plastics sheet material. The shell is subsequently attached to the core, for example by use of a two sided adhesive tape or other suitable adhesive means.

One problem which has arisen with this method of manufacture is that the shell does not always conform precisely to the shape of the core with which it is to mate because of the use of two different moulds and the variable shrinkages which may occur as the shell and core cool subsequent to moulding. In addition, because the shell and core are manufactured separately and then adhered together, there is always a potential problem with the strength of the bond between the two components and the overall strength of the final assembly - there is always a substantial risk that there will be an air gap between the two components so that where the gap is present there is an inherent weakness. In addition, the use of two separate moulds entails the expense of two moulds. Furthermore, there are possible production problems insofar as the production of shells and cores needs to be coordinated and storage space is required for the shells and cores prior to assembly.

Another way in which protective headgear has been formed is to first vacuum form a shell of a suitable impact resistant plastics sheet material, to a desired shape and then to fill the vacuum formed shell with a foam. This requires the use of matched tools to support the vacuum formed shell and to define the shape of the foam during the moulding cycle. Furthermore, adhesion between the shell and the foam core can be poor and, unless the materials are chosen very carefully the component materials of the foam can damage and weaken the impact resistant shell.

One of the various objects of the present invention is to provide an improved method of making an article comprising a plastics foam core and a cover portion of sheet plastics material.

Another of the various objects of the present invention is to provide an improved helmet with a high degree of energy absorption and penetrative resistance.

In one aspect the invention may be considered to provide a method of making an article having a core of foam material and a cover of sheet material comprising moulding to a desired shape the core of foam first thermo-plastics material, having a first softening temperature, mounting the core on a support of a forming machine with a surface of the core exposed, procuring a sheet of a second thermoplastics material having a second softening temperature, heating it to a temperature at which the sheet is formable said second temperature being greater than said first temperature, placing the softened sheet adjacent the exposed surface of the core, and moulding the sheet about the exposed surface of the core, whereby the sheet conforms intimately with and adheres to a portion of the exposed surface, whilst not causing collapse of the foam core material, thereby to provide said article comprising a foam plastics material core covered by a sheet of plastics material adhered thereto.

Suitably the second temperature is about 100°C greater than the first temperature.

In carrying out a method in accordance with the invention the first thermo-plastics material is preferably a modified polystyrene, conveniently polystyrene modified with polyphenylene oxide additive, although other thermo-plastics materials with suitable properties may be used. As a second thermo-plastics material, any suitable thermo-plastics material may be used. One suitable material comprises polycarbonate resin.

In carrying out a method in accordance with the invention the surface of the core may be coated with a coating material, for example a water based, high temperature paint system, if desired.

In carrying out a method in accordance with the invention, the core may comprise a plurality of openings extending therethrough to the exposed surface of the core. In such a case, the supports of the vacuum forming machine may comprise elements projecting into the holes in the core, terminal portions of the elements being positioned and of such a construction as to militate against collapse of the sheet material into the holes during forming of the sheet material around the core.

In carrying out a preferred method in accordance with the invention the sheet material is clamped and heated to a preselected temperature. The temperature is conveniently monitored by suitable means, for example a pyrometer, the construction and arrangement being such that when the means for monitoring the temperature indicates that the sheet material has reached the preselected temperature, heating is terminated and the softened sheet material moulded about and adhered to the core.

Preferably in carrying out a method in accordance with the invention the softened sheet material is preformed to a shape, suitably approximating that of the exposed surface of the core, before being moulded about the exposed surface of the core; suitably the sheet material is preformed by blowing air into the softened sheet material to form a bubble.

In a preferred method in accordance with the invention the sheet material is positioned above the core and the core and preformed softened sheet material are brought into close proximity by upward movement of the support carrying the core, as the bubble is blown, the bubble and the core reaching their maximum height substantially simultaneously, with the core being forced into engagement with the sheet material of the bubble to mould the sheet material around the exposed surface of the core. The supply of air forming the bubble is terminated substantially at the same time, vacuum being applied after a short delay of, for example, about five seconds, to draw the sheet material around lower portions of the core.

In carrying out a method in accordance with the invention, the sheet material is preferably subjected to forced cooling after being moulded about and adhered to the core.

The first thermo-plastics material is selected not only to be such as to be used in a method in accordance with the invention but also to give desired properties in the final article: the foam material of the core must therefore have sufficient strength and rigidity to permit the sheet material to be moulded about the core without significant deformation but also to provide the necessary strength for the end use, e.g. as protective head-gear.

Amongst the products which may be suitable for use as the first thermo-plastics material are various grades of a material sold under the name CARIL supplied by Shell; grades which may be suitable include 360R (softening point about 130°C).

Grades of polystyrene typically used at present for moulding cores of helmets which are to be subsequently adhered to preformed shells have softening point significantly lower than those mentioned above, for example 78°C. It is important to ensure that the softening point of the first thermo-plastics material is not too low and that the material is such that it does not collapse rapidly when subjected temporarily to temperatures considerably in excess of its softening point. The preferred modified polystyrene materials have softening points in the range of 120°C+. The softening point of the second thermo-plastics material is preferably greater than 170°C, for example about 220°C.

Although the temperature to which the sheet material must be heated to make it sufficiently formable may be of the order of 200°C or even greater, it will be appreciated that the sheet material will cool rapidly as it is formed and it is likely that the temperature of the sheet material will be lower than the preselected temperature to which it is preferably heated by the time it comes into contact with the core material and thereafter the temperature of the sheet material will fall rapidly.

In another aspect the invention may be considered to provide a helmet comprising a core of modified polystyrene foam material having a convex outer surface and a concave inner surface of a dimension and shape to accommodate the head of a user, and an impact resistant sheet intimately conformed with and bonded to the convex outer surface of the core.

A helmet in accordance with the invention is preferably made by a method in accordance with the invention.

There now follows a detailed description to be read with reference to the accompanying drawings, of an article namely a helmet and a method of making the helmet, embodying the invention. It will be realised that this method and helmet have been selected for description to illustrate the invention by way of example.

In the accompanying drawings:-
Figure 1 is a diagrammatic view, in cross section, showing a helmet embodying the invention;
Figure 2 is a diagrammatic drawing, partly in section, showing the manufacture of the helmet of figure 1, in carrying a method embodying the invention;

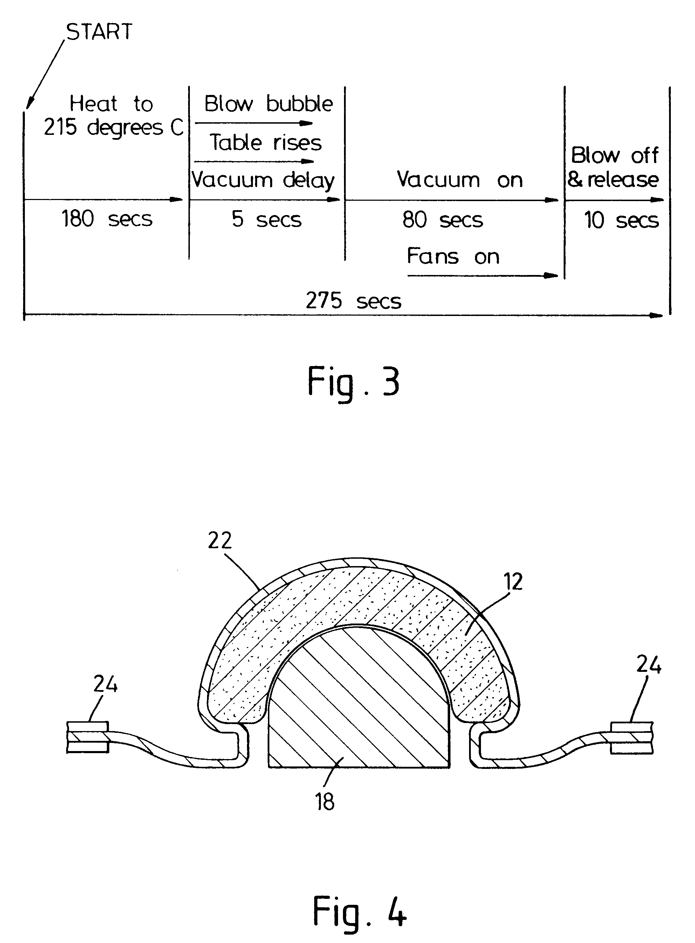

Figure 3 is a diagram showing the operating cycle of a vacuum forming machine used in carrying out the illustrative method; and
Figure 4 is a diagrammatic view showing the moulding of the sheet material around the core after vacuum has been applied.

The illustrative helmet 10 comprises a core 12 of a rigid, modified polystyrene foam having a convex outer surface and a concave inner surface, and an external shell 14 of an impact resistant plastics material intimately adhered to the core 12 during manufacture in carrying out the illustrative method. A plurality of holes 16 (only one shown in the drawings, for simplicity) extend through the helmet for various purposes, for example ventilation or for the attachment of appropriate straps or webbing. The interior concave surface of the helmet 10 is designed to correspond, approximately, with the shape of the head of the wearer and the straps or webbing which are adjustable are used to provide final adjustment so that the helmet snugly fits the head of the wearer thereby providing the desired level of protection.

In manufacturing the illustrative helmet 10, carrying out the illustrative method, the core 12 is first formed in a mould by well-known techniques for forming this type of foam. The core 12 is moulded of a first thermo-plastics material, preferably a modified polystyrene material, suitably as referred to above.

In carrying out the illustrative method the core 12 is placed on a support 18 of a vacuum forming machine of generally well-known construction. The support 18 is specially configured to snugly fit within the concave inner surface of the core 12 and has one or more elements 20 (which may be movable) positioned so as to extend into the holes 16 in the core 12.

A sheet 22 of a second thermo-plastics material, for example a polycarbonate sheet material about three millimetres in thickness sold under the name IMPAX, of an appropriate size, is positioned and clamped in position by clamping means 24 of the vacuum forming machine. At this time the support 18 is in its lowermost position, beneath the sheet material 22 clamped by the clamping means 24. The sheet material 22 is then heated by the heaters (not shown) of the vacuum forming machine from at least the upper side; the top heaters, heating the upper surface of the sheet material 22, are suitably quartz elements set at 100% power and the bottom heaters which heat the lower surface of the sheet material 22 if desired are rod elements which, if used, are set to operate at lower, for example 20%, power. It has been found that it is preferable to supply most, if not all, of the heat to the upper surface of the sheet material, i.e. the side opposite that which will be engaged by the core.

The sheet material 22 is heated for a suitable time, dependent on the material used. The sheet material temperature is checked by the pyrometer of the vacuum forming machine. When a pre-set temperature as detected by the pyrometer has been reached, the heaters are retracted and switched off. For the IMPAX polycarbonate sheet referred to above the pre-set temperature is suitably 220°C.

As the heaters are retracted air is blown from a plurality of nozzles 26 into the softened sheet material 22 from below to create a bubble 23 (shown in dash line) which is convex upwardly. The bubble is blown to a height of about 150 millimetres above the plane of the sheet material 22 clamped in the clamping means 24. At the same time as the bubble is blown, the support 18 is raised carrying the foam core 12 and support 18 into the void formed by the bubble. The support reaches its maximum raised position at the same time as the bubble 23 is at its full height and the exposed, convex outer surface 13 engages the bubble so that the sheet material is formed around the core.

The blowing air provided through the nozzles 26 is terminated and after a delay of approximately five seconds vacuum is applied by the vacuum forming machine causing the sheet material to mould firmly around the exposed convex surface of the core 12, drawing sheet material into intimate contact with the exposed surface of the core 12 and drawing sheet material inwardly around lower portions 19 of the core. The vacuum is held for a suitable length of time, conveniently about 80 seconds, to ensure full contact with the concave surface 13 and with the lower portions of the core 12.

The sheet material 22 is then cooled by blowing air against the sheet material using fan means; the fans are switched on partway through the 80 second period during which the vacuum is held. When the sheet material 22 is fully conformed with the convex surface 13 of the core 12 and sufficiently cooled to be in a substantially rigid hardened condition, the cooling is ceased and the vacuum is removed and air is blown through the support 18 to release the core 12 from the support. The clamping means 24 are also removed.

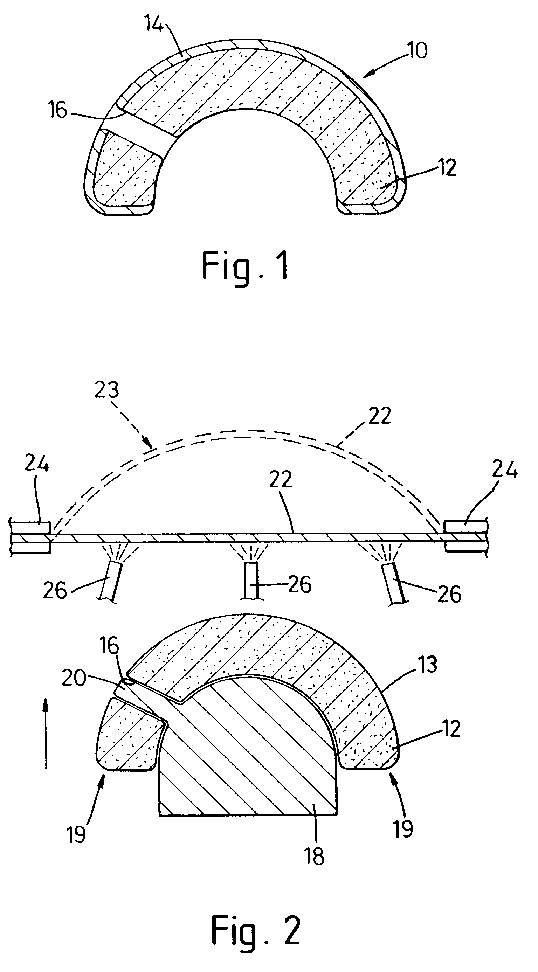

The sheet material 22 is subsequently trimmed as is well-known in the manufacture of vacuum formed articles to provide the helmet 10 shown in Figure 1, in which the shell has an inwardly turned peripheral portion intimately engaged with and bonded to the lower portion of the core extending between the convex outer surface and the concave inner surface. The trimmed vacuum-formed sheet material 22 provides the impact-resistant shell 14. If necessary, the sheet material is trimmed around the openings 16 so that they are not blocked by sheet material.

By appropriate design of the support 18, the moulding of the sheet material around the lower edge portion 19 of the core 12, to some extent is facilitated. Also, by suitable design of the core and of the elements 20, the sheet material 22 may be drawn to some extent into the holes 16 to present a pleasing appearance to the external mouths of the holes 16.

The temperature to which the sheet material 22 is heated is selected to be such that when it is bought into engagement with the concave surface of the core, the outermost skin of material of the core 12 softens; it is believed that this is such as to provide a firm bond with the shell, so that the shell 14 is adhered firmly to the sheet material 24. It is therefore important to select first and second thermo-plastic materials such that an adequate level adhesion between the sheet material 22 and the core 12 occurs. However, if desired the core 12 may be coated with an appropriate coating material to limit the melting of core 12 or to assist bonding.

It is also important that the first thermoplastics material of the core 12 retains some degree of stability when temporarily heated by more than 50°C over its softening point. The polystyrene materials commonly used at present in making polystyrene foam articles do not have a sufficient degree of stability when exposed to very high temperatures for a short period of time and such polystyrene materials are not generally suitable for use in carrying out the method of the present invention.

Where the helmet is to provide protection against impact, it is also important to select a sheet material 22 which remains impact resistant and relatively rigid over the range of temperatures and conditions to which it is likely to be exposed during use; thus the second softening temperature must be sufficiently high that the shell 14 maintains its rigidity and protective function during use and the shell must not become brittle such that it easily shatters on impact.

The illustrative helmet comprises an external shell 14 of impact resistance thermo-plastics material intimately and firmly bonded with a modified polystyrene foam core 12. The protection afforded by the illustrative helmet is thought to be substantially greater than would be the case using a separately moulded shell 14 and core 12 of similar materials, and thicknesses, adhered together at a later stage in the previously known fashion.

## Claims

1. A method of making an article (10) having a core (12) of foam material and a cover (14) which comprises moulding to a desired shape the core (12) of foam first thermo-plastics material having a first softening temperature, mounting the core (12) on a support (18) of a forming machine with a surface of the core (12) exposed, procuring a sheet (22) of a second thermoplastics material having a second softening temperature, heating it to a temperature at which the sheet (22) is formable said second temperature being greater than said first temperature, placing the softened sheet (22) adjacent the exposed surface of the core (12) and moulding the sheet about the exposed surface (13) of the core (12) whereby the sheet (22) conforms intimately with and adheres to a portion of the exposed surface (13), whilst not causing collapse of the foam core material, thereby to provide said article comprising a foam plastics material core having a part covered by a shell (14) of plastics material adhered to the core (12).

2. A method according to Claim 1 wherein said second softening temperature is about 100°C greater than said first temperature.

3. A method according to either one of Claims 1 and 2 wherein the first thermoplastics material is a modified polystyrene, for example modified with polyphenol oxide additive.

4. A method according to any one of the preceding claims wherein the second thermoplastics material comprises polycarbonate.

5. A method according to any one of the preceding claims where the surface of the core is coated with a coating material, for example a water based, high temperature paint system.

6. A method according to any one of the preceding claims wherein the core (12) comprises a plurality of openings (16) extending therethrough, to the exposed surface (13) of the core, and wherein the support (18) of the forming machine comprises elements (20) projecting into said holes, terminal portions of the elements being positioned to militate against collapse of the sheet material into the holes.

7. A method according to any one of the preceding claims wherein the sheet material (22) is clamped (24) and heated to a pre-selected temperature.

8. A method according to Claim 7 wherein the temperature of the sheet is monitored by a pyrometer, the construction and arrangement being such that when the pyrometer indicates that the sheet material (22) has reached the pre-selected temperature, heating is terminated and the softened sheet material moulded about and adhered to the core.

9. A method according to any one of the preceding claims wherein the softened sheet material (22) is pre-formed to a shape approximating that of the exposed surface of the core before being conformed with the core, for example preformed by blowing air (26) into the softened sheet material to form a bubble (23).

10. A method according to Claim 9 wherein the sheet material is positioned above the core and the core and pre-formed softened sheet material are brought into close proximity by upward movement of the support (18) carrying the core as a bubble (23) is blown, the bubble (23) and the core (12) reaching their maximum heights substantially simultaneously with the core forced into engagement with the sheet material of the bubble and the supply of air forming the bubble being terminated substantially at the same time.

11. A method according to Claim 10 wherein, after termination of the air supply, vacuum is applied to draw the sheet material inwardly around lower portions (19) of the core, into intimate engagement with the lower portions (19).

12. A method according to any one of the preceding claims wherein the sheet material is subjected to forced cooling after being moulded about and adhered to the core.

13. A method according to any one of the preceding claims wherein the article is a helmet (10).

14. A helmet (10) comprising a core (12) of modified polystyrene foam material having a convex outer surface (23) and a concave inner surface of a dimension and shape to accommodate the head of a user, and an impact resistant shell (14) intimately conformed with and bonded to the convex outer surface of the core.

15. A helmet according to Claim 14 wherein the shell (14) has an inwardly turned peripheral portion intimately engaged with and bonded to a part (19) of the surface of the core extending between the convex outer surface (23) and the concave inner surface.
